# EUROPEAN PATENT APPLICATION

(11) **EP 4 439 756 A2**
(43) Date of publication of application: **02.10.2024**
(21) Application number: 24166264.2
(22) Date of filing: 26.03.2024
(51) Int. Cl.: H01M 10/04, H01M 10/613, H01M 10/625, H01M 10/647, H01M 10/6554, H01M 10/6556, H01M 10/6557, H01M 50/209, H01M 50/262, H01M 50/264

(54) **BATTERY PACK**

(30) Priority: 26.03.2023 KR 20230039406; 27.07.2023 KR 20230098443
(71) Applicant: Samsung SDI Co., Ltd., Yongin-si, Gyeonggi-do 17084 (KR)
(72) Inventor: Kim, Junseop, 17084 Yongin-si, Gyeonggi-do (KR); Jeong, Daein, 17084 Yongin-si, Gyeonggi-do (KR); Moon, Daeyon, 17084 Yongin-si, Gyeonggi-do (KR)
(74) Representative: Gulde & Partner

(57) **Abstract**

Provided is a battery pack. The battery pack includes a sub-holder assembly including first and second sub-holders arranged adjacent to each other, each saccommodating a plurality of battery cells and including side portions extending in first and second directions different from each other, a first inner plate and a first outer plate provided at an inner position and an outer position of the sub-holder assembly, respectively, and extending in the first direction with the first sub-holder therebetween, the first inner plate and the first outer plate including an upper locking protrusion and a lower locking protrusion that protrude toward an upper surface and a lower surface of the first sub-holder, respectively, in a third direction intersecting with the first and second directions and a nut member that is arranged together with the lower locking protrusion in the first direction, and a fastening member sequentially passing through a cooling plate and the nut member and accommodated in a lower portion of the first sub-holder, wherein the cooling plate is disposed below the first and second sub-holders.

## Description

### BACKGROUND

### 1. Field

One or more embodiments relate to a battery pack.

### 2. Description of the Related Art

In general, secondary batteries can be charged and discharged, unlike primary batteries that cannot be charged. Secondary batteries are used as energy sources for mobile devices, electric vehicles, hybrid vehicles, electric bicycles, uninterruptible power supplies, etc. Also, depending on the type of external devices to which secondary batteries are applied, the secondary batteries may be used in the form of a single battery or a pack in which a plurality of batteries are connected and bundled into a unit.

A small mobile device, such as a mobile phone, may operate for a certain period of time with only the output and capacity of a single battery. However, if use for a long period of time and high power are required, such as in a large-sized mobile device that includes a laptop or an electric vehicle or a hybrid vehicle that consumes a lot of power, a pack type including a plurality of batteries is preferred due to the output and capacity thereof. Also, the output voltage or output current may be increased according to the number of batteries embedded therein.

### SUMMARY

One or more embodiments include a battery pack that includes at least two sub-holders each accommodating a plurality of battery cells. Inner plates and outer plates may be firmly coupled to each other while surrounding (e.g., while surrounding in a plan view or while extending around a periphery of) sub-holders or a sub-holder assembly including a plurality of sub-holders to prevent movement between the different sub-holders and may resist the weight of the sub-holders or the sub-holder assembly or load acting on the sub-holders or the sub-holder assembly. Therefore, rigidity of the entire battery pack may be strengthened by the inner plates and the outer plates.

Additional aspects will be set forth in part in the description which follows and, in part, will be apparent from the description, or may be learned by practice of the presented embodiments of the present disclosure.

According to one or more embodiments, a battery pack includes a sub-holder assembly including first and second sub-holders arranged adjacent to each other, each accommodating a plurality of battery cells and including side portions extending in first and second directions different from each other, a first inner plate and a first outer plate provided at an inner position and an outer position of the sub-holder assembly, respectively, and extending in the first direction with the first sub-holder therebetween, the first inner plate and the first outer plate including an upper locking protrusion and a lower locking protrusion that protrude toward an upper surface and a lower surface of the first sub-holder, respectively, in a third direction intersecting with or crossing the first and second directions and a nut member that is arranged together with the lower locking protrusion in the first direction, and a fastening member sequentially passing through a cooling plate and the nut member and accommodated in a lower portion of the first sub-holder, wherein the cooling plate is disposed below the first and second sub-holders.

In one or more embodiments, the first and second sub-holders may be arranged adjacent to each other in the second direction, the first outer plate may be provided and may be arranged at outer positions, on opposite sides, of the first and second sub-holders adjacent to each other, the first inner plate may be located at an inner position between the first and second sub-holders, and the first and second sub-holders may be respectively arranged between the first inner plate and one of the first outer plates and between the first inner plate and the other one of the first outer plates, and the first and second sub-holders may be prevented from moving in an up and down direction by the upper locking protrusion and the lower locking protrusion that protrude toward the first and second sub-holders while facing each other.

In one or more embodiments, the first inner plate may be provided in a pair overlapping with each other while extending in parallel in the first direction between the first and second sub-holders, and In one or more embodiments, the first inner plate may be provided in a pair overlapping with each other while extending in parallel in the first direction between the first and second sub-holders, and the first and second sub-holders may be arranged between the lower locking protrusions and the upper locking protrusions protruding in both directions from the pair of first inner plates overlapping with each other.

In one or more embodiments, each of the first inner plate and the first outer plate may include an embossing portion that matches the first sub-holder located between the first inner plate and the first outer plate.

In one or more embodiments, the embossing portions of the first inner plate and the first outer plate may extend in the first direction and may be configured to prevent the first inner plate, the first outer plate, and the first sub-holder from moving relative to each other in the third direction intersecting with the first and second directions.

In one or more embodiments, the first inner plate may extend in the first direction from a central bent portion that surrounds or extends around a central corner of each of the first and second sub-holders, and an inner plate unit may be formed by integrating the first inner plate with a second inner plate extending in the second direction from the central bent portion.

In one or more embodiments, the central corners of the first and second sub-holders may be formed at inner positions of the sub-holder assembly.

In one or more embodiments, first inner plates of different inner plate units may be provided between the first and second sub-holders and respectively surrounding or extending around the first and second sub-holders may overlap with each other while extending in parallel in the first direction.

In one or more embodiments, extension ends of the first inner plates extending from a space between the first and second sub-holders to an area beyond the first and second sub-holders may be provided with first bent portions bent in both directions to surround or extend around corners of the first and second sub-holders.

In one or more embodiments, second inner plates of different inner plate units surrounding or extending around the first and second sub-holders may extend in opposite directions along the second direction from first inner plates between the first and second sub-holders.

In one or more embodiments, extension ends of the second inner plates extending in opposite directions along the second direction from the first inner plates between the first and second sub-holders may be provided with second bent portions bent to surround or extend around corners of the first and second sub-holders.

In one or more embodiments, the battery pack may further include a bus bar disposed, above the sub-holder assembly, on the opposite side from the cooling plate in the third direction intersecting with the first and second directions and electrically connecting different battery cells to each other.

In one or more embodiments, the first and second inner plates of the inner plate unit may form a height difference relative to each other in the third direction.

In one or more embodiments, the first and second inner plates of the inner plate unit may be aligned with each other at a lower position of the inner plate unit adjacent to the cooling plate in the third direction and may form a height difference relative to each other at an upper position of the inner plate unit adjacent to the bus bar on the opposite side from the cooling plate.

In one or more embodiments, a height of the first inner plate and a height of the first outer plate may be substantially equal to a height of the sub-holder assembly, so that the upper locking protrusion and the lower locking protrusion respectively protruding from upper and lower positions of the first inner plate and the first outer plate extend onto upper and lower surfaces of the sub-holder assembly including the first and second sub-holders, and a height of the second inner plate may be less than the height of the sub-holder assembly.

In one or more embodiments, each of the upper locking protrusion and the lower locking protrusion may be provided in plurality spaced apart from each other in a longitudinal direction of the first inner plate and the first outer plate, and the nut member may be provided in plurality welded and coupled to a plurality of bent pieces arranged between the lower locking protrusions in the longitudinal direction of the first inner plate and the first outer plate.

In one or more embodiments, an accommodation space may be formed in a lower portion of the first sub-holder to accommodate the fastening member.

In one or more embodiments, the sub-holder assembly may further include a third sub-holder located on the opposite side from the first sub-holder in the first direction, with respect to a second inner plate of an inner plate unit surrounding or extending around the first sub-holder and a fourth sub-holder located on the opposite side from the second sub-holder in the first direction, with respect to a second inner plate of an inner plate unit surrounding or extending around the second sub-holder.

In one or more embodiments, the first and third sub-holders arranged in the first direction may be prevented from moving in an up and down direction by upper locking protrusions and lower locking protrusions, which protrude from a first outer plate extending across the first and third sub-holders and different first inner plates of different inner plate units respectively surrounding or extending around the first and third sub-holders, and
the second and fourth sub-holders arranged in the first direction may be prevented from moving in an up and down direction by upper locking protrusions and lower locking protrusions, which protrude from a first outer plate extending across the second and fourth sub-holders and different first inner plates of different inner plate units respectively surrounding or extending around the second and fourth sub-holders.

In one or more embodiments, the inner plate unit may include first to fourth inner plate units respectively surrounding or extending around central corners of the first to fourth sub-holders different from each other, and the first to fourth inner plate units may form an inner plate assembly having a cross shape and defining four divided regions, in which the first to fourth sub-holders are arranged, as the first and second inner plates of the first to fourth inner plate units overlap each other.

In one or more embodiments, ends of the inner plate assembly in the first direction may include first bent portions of first inner plates, having a wing shape, extending from a space between the first and second sub-holders to out of the space between the first and second sub-holders, and bent in opposite directions along the second direction to surround or extend around corners of the first and second sub-holders and other first bent portions of first inner plates, having a wing shape, extending from a space between the third and fourth sub-holders to out of the space between the third and fourth sub-holders, and bent in opposite directions along the second direction to surround or extend around corners of the third and fourth sub-holders.

In one or more embodiments, ends of the inner plate assembly in the second direction may include second bent portions bent from both ends of the second inner plates extending in opposite directions along the second direction from the first inner plates between the first and second sub-holders, to thereby surround or extend around corners of the first and second sub-holders and other second bent portions bent from both ends of the second inner plates extending in opposite directions along the second direction from the first inner plates between the third and fourth sub-holders, to thereby surround or extending around corners of the third and fourth sub-holders, wherein the second bent portions and the other second bent portions have a wing shape bent in opposite directions along the first direction.

In one or more embodiments, the first and second bent portions forming the ends of the inner plate assembly in the first and second directions may provide a coupling position with a second outer plate extending in the second direction and a coupling position with a first outer plate extending in the first direction, respectively.

In one or more embodiments, the first outer plate may be provided in a pair extending parallel to each other in the first direction at outer positions, facing each other, of the sub-holder assembly including the first to fourth sub-holders, and the second outer plate may be provided in a pair extending parallel to each other in the second direction at outer positions, facing each other, of the sub-holder assembly including the first to fourth sub-holders.

In one or more embodiments, a central position of the first outer plate may establish a connection with the second bent portion forming the end of the inner plate assembly in the second direction, and a central position of the second outer plate may establish a connection with the first bent portion forming the end of the inner plate assembly in the first direction.

In one or more embodiments, both ends of the first outer plates may include coupling flanges bent in the second direction to provide coupling positions with the second outer plates while surrounding or extending around the corners of the sub-holder assembly including the first to fourth sub-holders.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded perspective view of a battery pack according to embodiments of the present disclosure;
FIG. 2 is an exploded perspective view showing a state in which inner plates and outer plates of FIG. 1 are being assembled to each other;
FIG. 3 is an exploded perspective view illustrating a state in which the inner plates of FIG. 1 are being assembled to each other;
FIG. 4 is an exploded perspective view illustrating the configuration of an inner plate unit of FIG. 3;
FIG. 5 is a partial cross-sectional view of the battery pack taken along line A-A of FIG. 4 and illustrates rigid assembly between the inner plate and a sub-holder;
FIG. 6 is an exploded perspective view illustrating a state in which the outer plates of FIG. 1 are being assembled to each other;
FIG. 7 is a partial cross-sectional view of the battery pack taken along line C-C of FIG. 6 and illustrates rigid assembly between the outer plate and the sub-holder;
FIG. 8 is a partial cross-sectional view of the battery pack taken along line A-A of FIG. 4 and illustrates rigid assembly between the inner plate, the outer plate, and the sub-holder therebetween;
FIG. 9 is an exploded perspective view illustrating coupling between the inner plates and the outer plates;
FIG. 10 is a perspective view illustrating coupling positions between the inner plates and the outer plates;
FIG. 11 is a perspective view illustrating an assembly structure of a cooling plate; and
FIG. 12 is a cross-sectional view of the cooling plate taken along line B-B of FIG. 11 and illustrates the assembly structure of the cooling plate.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments of the present disclosure is described with reference to the drawings attached to the specification.

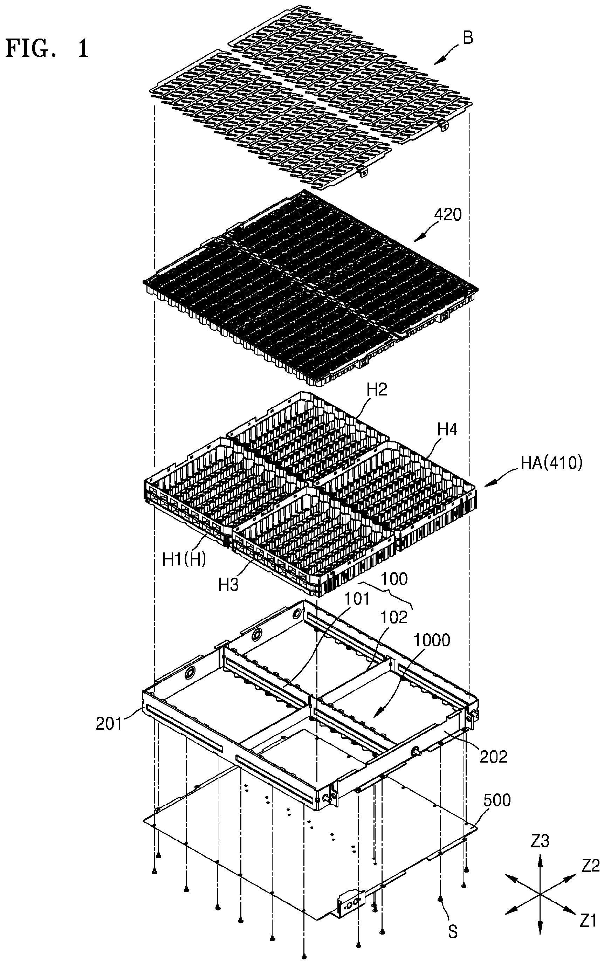

FIG. 1 is an exploded perspective view of a battery pack according to embodiments of the present disclosure.

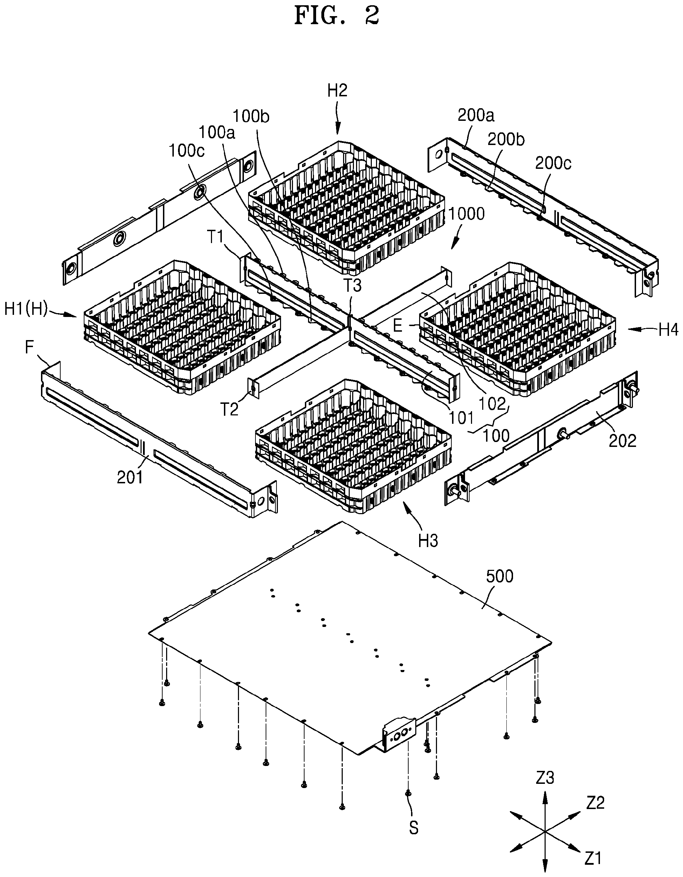

FIG. 2 is an exploded perspective view showing a state in which inner plates 101 and 102 and outer plates 201 and 202 of FIG. 1 are being assembled to each other.

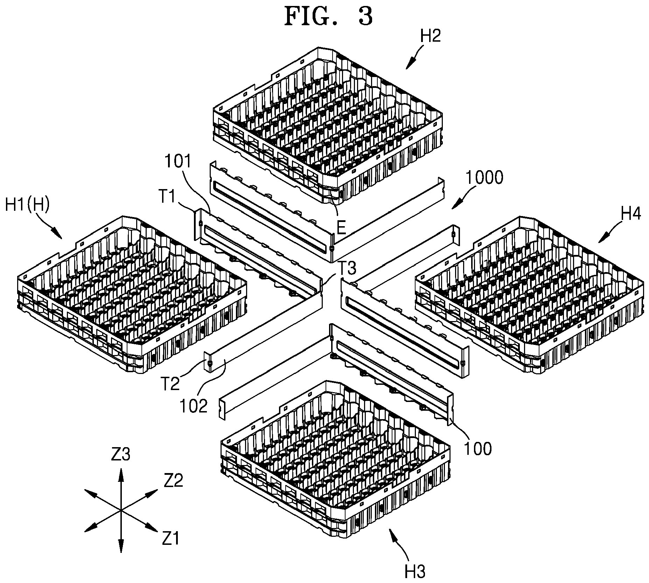

FIG. 3 is an exploded perspective view illustrating a state in which the inner plates 101 and 102 of FIG. 1 are being assembled to each other.

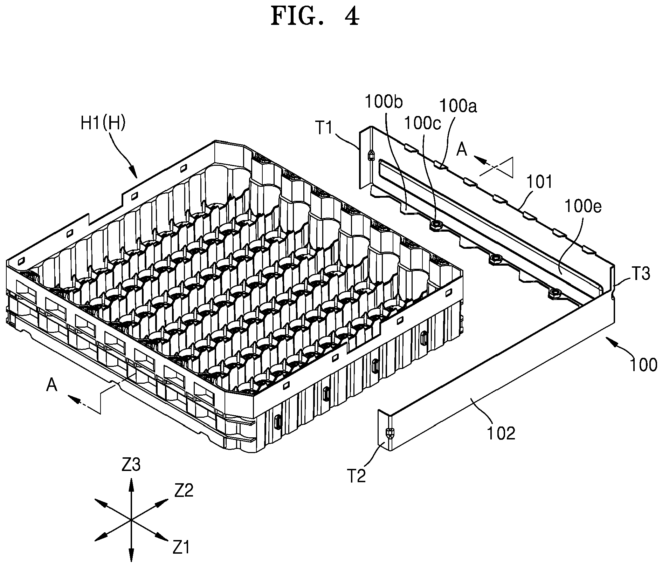

FIG. 4 is an exploded perspective view illustrating the configuration of an inner plate unit 100 of FIG. 3.

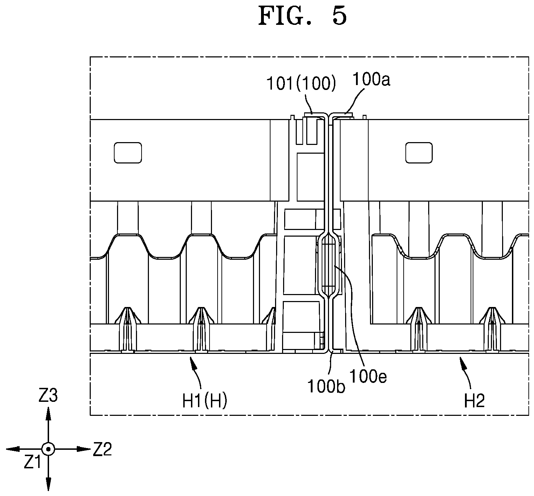

FIG. 5 is a partial cross-sectional view of the battery pack taken along line A-A of FIG. 4 and illustrates rigid assembly between the inner plate 101 and a sub-holder H.

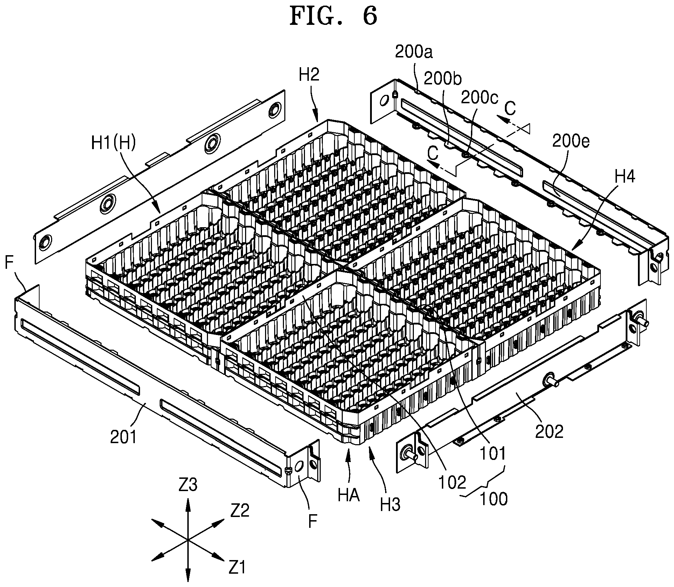

FIG. 6 is an exploded perspective view illustrating a state in which the outer plates 201 and 202 of FIG. 1 are being assembled to each other.

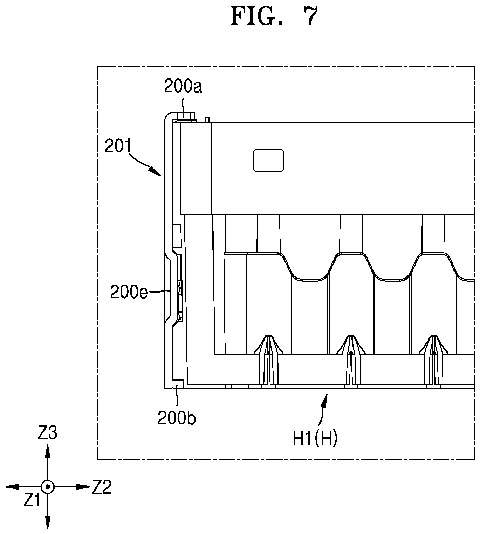

FIG. 7 is a partial cross-sectional view of the battery pack taken along line C-C of FIG. 6 and illustrates rigid assembly between the outer plate 201 and the sub-holder H.

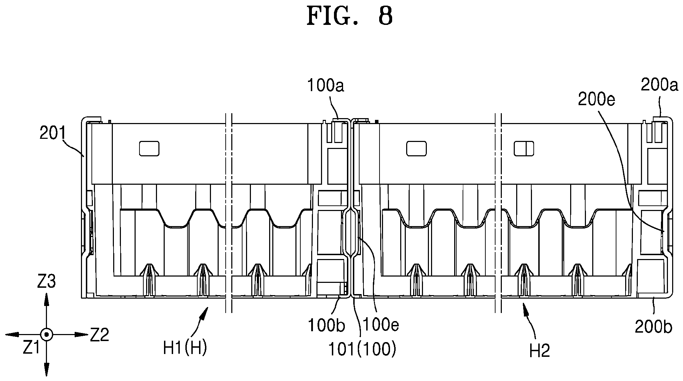

FIG. 8 is a partial cross-sectional view of the battery pack taken along line A-A of FIG. 4 and illustrates rigid assembly between the inner plate 101, the outer plate 201, and the sub-holder H therebetween.

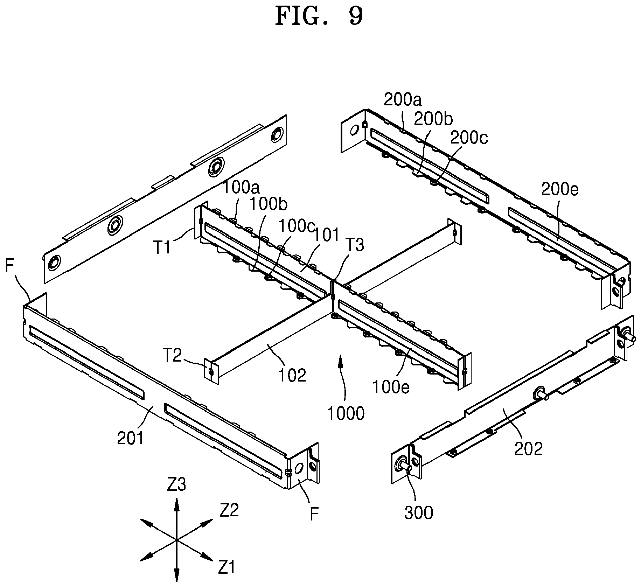

FIG. 9 is an exploded perspective view illustrating coupling between the inner plates 101 and 102 and the outer plates 201 and 202.

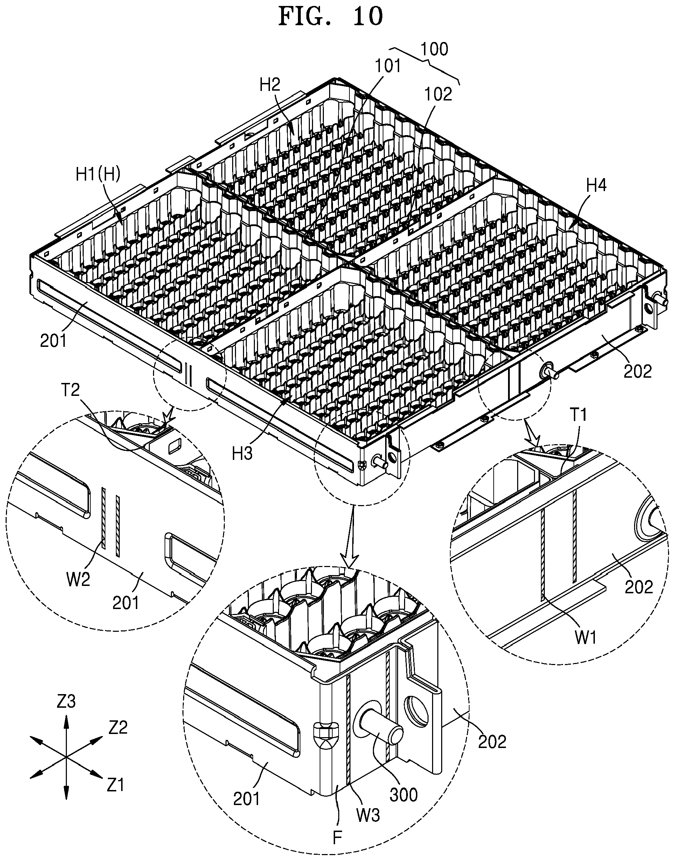

FIG. 10 is a perspective view illustrating coupling positions W1, W2, and W3 between the inner plates 101 and 102 and the outer plates 201 and 202.

Referring to the drawings, the battery pack according to embodiments of the present disclosure may include a sub-holder assembly HA including first and second sub-holders H1 and H2 arranged adjacent to each other, each accommodating a plurality of battery cells and including side portions extending in first and second directions Z1 and Z2 different from each other, an inner plate 101 (hereinafter, referred to as a first inner plate 101) and an outer plate 201 (hereinafter, a first outer plate 201) provided at an inner position and an outer position of the sub-holder assembly HA, respectively, and extending in the first direction Z1 with the first sub-holder H1 therebetween, the first inner plate 101 and the first outer plate 201 including upper locking protrusions 100a and 200a and lower locking protrusions 100b and 200b that are arranged in a third direction Z3 intersecting with the first and second directions Z1 and z2 and protrude toward the upper surface and the lower surface of the first sub-holder H1, respectively, and nut members 100c and 200c that are arranged together with the lower locking protrusions 100b and 200b in the first direction Z1, and fastening members S sequentially passing through a cooling plate 500 and the nut members 100c and 200c and accommodated in a lower portion of the first sub-holder H1, wherein the cooling plate 500 is disposed below the first and second sub-holders H1 and H2.

In embodiments of the present disclosure, the battery pack may include the sub-holder assembly HA including the first and second sub-holders H1 and H2, each accommodating a plurality of battery cells. Also, in embodiments of the present disclosure, each of the first and second sub-holders H1 and H2 may include side portions extending in the first and second directions Z1 and Z2 different from each other. In one or more embodiments, each of the first and second sub-holders H1 and H2 may include a pair of first side portions extending parallel to each other in the first direction Z1 with assembly positions for accommodating the plurality of battery cells therebetween and a pair of second side portions extending parallel to each other in the second direction Z2 with assembly positions for accommodating the plurality of battery cells therebetween so as to connect the pair of first side portions to each other. The first and second sub-holders H1 and H2 may have a substantially quadrangular box shape. Each of the first and second sub-holders H1 and H2 may provide cylindrical assembly positions for accommodating cylindrical battery cells.

Throughout this specification, the sub-holder H may include at least one of an upper holder 420 and a lower holder 410 that are coupled to face each other with the plurality of battery cells therebetween. In one or more embodiments, the sub-holder H may include only the lower holder410 as in the embodiments illustrated in the drawings. In various embodiments of the present disclosure, the sub-holder H may include only the upper holder 420 or both the upper holder 420 and the lower holder 410. As describe below, the upper locking protrusions 100a and 200a and the lower locking protrusions 100b and 200b may protrude from the first inner plate 101 and the first outer plate 201 extending parallel to each other in the first direction Z1 with the sub-holder H therebetween toward the upper and lower surfaces of the sub-holder H. Also, the sub-holder H may be located between the upper locking protrusions 100a and 200a and the lower locking protrusions 100b and 200b to thereby prevent the sub-holder H from moving in an up and down direction. Also, the weight of the sub-holder H or the load acting on the sub-holder H may be transmitted to the first inner plate 101 and the first outer plate 201. In one or more embodiments, the first inner plate 101 and the first outer plate 201 may provide rigidity to the entire battery pack. Throughout this specification, a feature, in which the sub-holder H is located between the first inner plate 101 and the first outer plate 201 and prevented from moving in the up and down direction by the upper locking protrusions 100a and 200a and the lower locking protrusions 100b and 200b protruding from the first inner plate 101 and the first outer plate 201, may encompass all of a feature, in which only the lower holder 410 is located, as the sub-holder H, between the upper locking protrusions 100a and 200a and the lower locking protrusions 100b and 200b of the first inner plate 101 and the first outer plate 201, and a feature, in which both the upper holder 420 and the lower holder 410 are located, as the sub-holder H, between the upper locking protrusions 100a and 200a and the lower locking protrusions 100b and 200b of the first inner plate 101 and the first outer plate 201.

Also, in embodiments of the present disclosure, the sub-holder assembly HA may include a plurality of sub-holders H arranged in the first and second directions Z1 and Z2. The sub-holder assembly HA may include, as the plurality of sub-holders H, a plurality of lower holders 410 arranged in the first and second directions Z1 and Z2 or may include, as the plurality of sub-holders H, the plurality of lower holders 410 and a plurality of upper holders 420 arranged in the first and second directions Z1 and Z2.

In various embodiments of the present disclosure, the sub-holder assembly HA may include the plurality of sub-holders H arranged in the first and second directions Z1 and Z2. In one or more embodiments, the first and second sub-holders H1 and H2 may be arranged in the second direction Z2. The sub-holder assembly HA may further include a third sub-holder H3 located adjacent to the first sub-holder H1 in the first direction Z1 and a fourth sub-holder H4 located adjacent to the second sub-holder H2 in the first direction Z1. The first to fourth sub-holders H1, H2, H3, and H4 may have substantially the same shape, and each of the first to fourth sub-holders H1, H2, H3, and H4 may include the first and second side portions extending in the first and second directions Z1 and Z2 different from each other. In one or more embodiments, the first to fourth sub-holders H1, H2, H3, and H4 may accommodate substantially the same number of battery cells. In one or more embodiments of the present disclosure, each of the first to fourth sub-holders H1, H2, H3, and H4 may have a substantially square box shape including the first and second side portions, and the battery pack may have a substantially square box shape including the first to fourth sub-holders H1, H2, H3, and H4 which are arranged in double rows in the first and second directions Z1 and Z2. As described above, in one or more embodiments of the present disclosure, the overall shape of the battery pack may have a substantially square box shape in the first and second directions Z1 and Z2, and thus, a space for mounting the battery pack may be efficiently used.

Hereinafter, various embodiments of the present disclosure may be comprehensively described. In one or more embodiments, technical configurations that are common to each other for one or more embodiments (first embodiments) including the first and second sub-holders H1 and H2 and one or more embodiments (second embodiments) including the first to fourth sub-holders H1, H2, H3, and H4 may be comprehensively described for these different embodiments. Unless otherwise stated below, the technical configurations described below may be applied in common to both the one or more embodiments (first embodiments) including the first and second sub-holders H1 and H2 and the one or more embodiments (second embodiments) including the first to fourth sub-holders H1, H2, H3, and H4. In one or more embodiments, the technical configurations applied in common to both the first and second embodiments may be explained below, without distinguishing between the one or more embodiments (first embodiments) including the first and second sub-holders H1 and H2 and the one or more embodiments (second embodiments) including the first to fourth sub-holders H1, H2, H3, and H4. Unless otherwise stated, the technical configurations described below may be applied in common to the first and second embodiments. In one or more embodiments, hereinafter, embodiments of the present disclosure may selectively refer to any one of the first and second embodiments or may comprehensively refer to both the first and second embodiments. For example, embodiments of the present disclosure may refer to embodiments to which the corresponding technical configurations are applied, depending on the technical configurations to be mentioned.

In one or more embodiments, different sub-holders H (e.g., the first to fourth sub-holders H1, H2, H3, and H4) forming the sub-holder assembly HA may have substantially the same configuration. In some embodiments, the technical configuration of one sub-holder H described below may be applied to the other sub-holders H in the same manner.

The battery pack according to embodiments of the present disclosure may include the first inner plate 101 and the first outer plate 201 arranged at the inner position and the outer position, respectively, of the sub-holder assembly HA including the first and second sub-holders H1 and H2. The first inner plate 101 and the first outer plate 201 may extend in the first direction Z1 with the first sub-holder H1 therebetween and may include the upper locking protrusions 100a and 200a and the lower locking protrusions 100b and 200b that are arranged in the third direction Z3 intersecting with the first and second directions Z1 and Z2 and protrude toward the upper and lower surfaces of the first sub-holder H1, respectively. In one or more embodiments, the first inner plate 101 may extend in the first direction Z1 at the inner position of the sub-holder assembly HA and include the upper locking protrusion 100a and the lower locking protrusion 100b that are arranged in the third direction Z3 intersecting with the first and second directions Z1 and Z2 and protrude toward the upper surface and the lower surfaces of the first sub-holder H1, respectively. Also, the first outer plate 201 may extend in the first direction Z1 at an outer position of the sub-holder assembly HA and include the upper locking protrusion 200a and the lower locking protrusion 200b that are arranged in the third direction Z3 and protrude toward the upper surface and the lower surfaces of the first sub-holder H1, respectively.

In embodiments of the present disclosure, a feature, in which the first inner plate 101 includes the upper locking protrusion 100a and the lower locking protrusion 100b at the inner positions of the sub-holder assembly HA, may indicate that the first inner plate 101 includes the upper locking protrusion 100a and the lower locking protrusion 100b arranged at the inner positions of the sub-holder assembly HA, but may not indicate that the first inner plate 101 is entirely located at the inner position of the sub-holder assembly HA. In embodiments of the present disclosure, an end of the first inner plate 101 may include a first bent portion T1 of the first inner plate 101, which has a wing shape, extends from a space between the first and second sub-holders H1 and H2 to out of the space between the first and second sub-holders H1 and H2, and is bent in opposite directions along the second direction Z2 to surround or extend around corners of the first and second sub-holders H1 and H2. Also, the first bent portion T1 of the first inner plate 101 may be located at an outer position of the sub-holder assembly HA. In embodiments of the present disclosure, the inner position of the sub-holder assembly HA may refer to a position that is surrounded or extended around (e.g., surrounded in a plan view by) by the sub-holder H forming the sub-holder assembly HA and the outer position of the sub-holder assembly HA may refer to a position that is not surrounded by the sub-holders H forming the sub-holder assembly HA.

A feature, in which the first outer plate 201 includes the upper locking protrusion 200a and the lower locking protrusion 200b at the outer positions of the sub-holder assembly HA unlike the first inner plate 101, may indicate that the first outer plate 201 includes the upper locking protrusion 200a and the lower locking protrusion 200b arranged at the outer positions of the sub-holder assembly HA. Unlike the first inner plate 101, the first outer plate 201 may be entirely located at the outer position of the sub-holder assembly HA.

In embodiments of the present disclosure, the first and second sub-holders H1 and H2 may be arranged adjacent to each other in the second direction Z2, the first outer plate 201 may be provided in a pair arranged at outer positions, on opposite sides, of the first and second sub-holders H1 and H2 adjacent to each other, and the first inner plate 101 may be located at an inner position between the first and second sub-holders H1 and H2. Also, the first and second sub-holders H1 and H2 may be respectively arranged between the first inner plate 101 and one of the first outer plates 201 and between the first inner plate 101 and the other one of the first outer plates 201, and the first and second sub-holders H1 and H2 may be prevented from moving in the up and down direction by the upper locking protrusions 100a and 200a and the lower locking protrusions 100b and 200b that protrude toward the first and second sub-holders H1 and H2 while facing each other.

In embodiments of the present disclosure, the first inner plate 101 and the first outer plate 201 may include embossing portions 100e and 200e that match the first and second sub-holders H1 and H2 facing each other. In one or more embodiments, the embossing portions 100e and 200e of the first inner plate 101 and the first outer plate 201 may extend in the first direction Z1 and prevent the first inner plate 101, the first outer plate 201, and the first and second sub-holders H1 and H2 from moving relative to each other in the third direction Z3 intersecting with the first and second directions Z1 and Z2. In one or more embodiments, in embodiments of the present disclosure, the side portions of the first and second sub-holders H1 and H2 facing the first inner plate 101 and the first outer plate 201 may include recessed grooves that extend in the first direction Z1 so as to match the embossing portions 100e and 200e of the first inner plate 101 and the first outer plate 201. Also, the first inner plate 101 and the first outer plate 201 may include the embossing portions 100e and 200e that protrude toward the first and second sub-holders H1 and H2 so as to match the recessed grooves of the first and second sub-holders H1 and H2.

In embodiments of the present disclosure, the first inner plate 101 may be provided in a pair overlapping with each other while extending in parallel in the first direction Z1 between the first and second sub-holders H1 and H2. The first and second sub-holders H1 and H2 may be arranged between the lower locking protrusions 100b and the upper locking protrusions 100a protruding in both directions from the pair of first inner plates 101 overlapping with each other and may be prevented from moving in the third direction Z3 intersecting with the first and second directions Z1 and Z2.

In embodiments of the present disclosure, the first and second sub-holders H1 and H2 forming the sub-holder assembly HA may be surrounded by (e.g., surrounded in a plan view by) inner plate units 100 different from each other. In one or more embodiments, the battery pack according to the embodiments of the present disclosure may include different inner plate units 100 respectively surrounding or extending around the central corners E of the first and second sub-holders H1 and H2. In one or more embodiments, the inner plate units 100 respectively surrounding or extending around the first and second sub-holders H1 and H2 may include central bent portions T3 surrounding or extending around the central corners E of the first and second sub-holders H1 and H2 and first and second inner plates 101 and 102 extending from the central bent portions T3 in the first and second directions Z1 and Z2, respectively. In one or more embodiments, each of the inner plate units 100 may include the first and second inner plates 101 and 102 that form a single body while extending from the central bent portions T3 in the first and second directions Z1 and Z2 different from each other, and each of the inner plate units 100 may be provided as a thin metal plate that is integrally formed to include the central bent portion T3.

Throughout this specification, the central corners E of the first and second sub-holders H1 and H2 may refer to corners at inner positions surrounded by the sub-holders H forming the sub-holder assembly HA. In one or more embodiments, in embodiments including the first to fourth sub-holders H1, H2, H3, and H4 arranged in double rows in the first and second directions Z1 and Z2, the central corners E of the first and second sub-holders H1 and H2 may refer to corners at or near the central positions of the sub-holder assembly HA including a combination of the first to fourth sub-holders H1, H2, H3, and H4. In one or more embodiments, the central corner E of one sub-holder H may be surrounded by the other sub-holders H.

The first inner plates 101 of the different inner plate units 100 respectively surrounding or extending around the first and second sub-holders H1 and H2 may overlap with each other between the first and second sub-holders H1 and H2 while extending parallel to each other in the first direction Z1. Also, the first inner plates 101 extending from a space between the first and second sub-holders H1 and H2 to out of the space between the first and second sub-holders H1 and H2 may be provided with first bent portions T1 bent in both directions to surround or extend around corners of the first and second sub-holders H1 and H2 (e.g., corners at outer positions out of the space between the first and second sub-holders H1 and H2). As described below, in embodiments including the first to fourth sub-holders H1, H2, H3, and H4, an inner plate assembly 1000, in which different inner plate units 100 surrounding or extending around the first to fourth sub-holders H1, H2, H3, and H4 are combined with each other, may have an approximately cross shape defining four divided regions in which the first to fourth sub-holders H1, H2, H3, and H4 are arranged. The first bent portions T1 may form ends in the first direction Z1 in the inner plate assembly 1000 having an approximately cross shape and may provide coupling positions W1 while coming into surface contact with the central positions of the second outer plates 202 extending in the second direction Z2.

In embodiments of the present disclosure, the second inner plates 102 of the different inner plate units 100 surrounding or extending around the first and second sub-holders H1 and H2 may extend in opposite directions along the second direction Z2 from the first inner plates 101 that are arranged between the first and second sub-holders H1 and H2. Also, extension ends of the second inner plates 102 extending in opposite directions along the second direction Z2 from the first inner plates 101 between the first and second sub-holders H1 and H2 may be provided with second bent portions T2 that are bent to surround or extend around corners of the first and second sub-holders H1 and H2. In one or more embodiments, the second inner plate 102 may extend from a space between the first and third sub-holders H1 and H3 and include the second bent portion T2 that surrounds the corner (the corner of the first sub-holder H1) located at an outer position out of the space between the first and third sub-holders H1 and H3 or may extend from a space between the second and fourth sub-holders H2 and H4 and include the second bent portion T2 that surrounds the corner (the corner of the second sub-holder H2) located at an outer position out of the space between the second and fourth sub-holders H2 and H4. As described below, in embodiments including the first to fourth sub-holders H1, H2, H3, and H4, an inner plate assembly 1000, in which different inner plate units 100 surrounding or extending around the first to fourth sub-holders H1, H2, H3, and H4 are combined with each other, may have an approximately cross shape defining divided four regions in which the first to fourth sub-holders H1, H2, H3, and H4 are arranged. The second bent portions T2 may form ends in the second direction Z2 in the inner plate assembly 1000 having an approximately cross shape and may provide coupling positions W2 while coming into surface contact with the central positions of the first outer plates 201 extending in the first direction Z1.

In embodiments of the present disclosure, a cooling plate 500 may be disposed below the sub-holder assembly HA including the first and second sub-holders H1 and H2 or the first to fourth sub-holders H1, H2, H3, and H4 in the third direction Z3 intersecting with the first and second directions Z1 and Z2. A bus bar B for electrically connecting different battery cells to each other may be disposed, above the sub-holder assembly HA, on the opposite side from the cooling plate 500.

The inner plate unit 100 may include the first and second inner plates 101 and 102 extending in the first and second directions Z1 and Z2, respectively, from the central corner E of each of the sub-holders H forming the sub-holder assembly HA so as to surround or extend around the central corner E. Also, the first and second inner plates 101 and 102 may form a height difference relative to each other in the third direction Z3. In one or more embodiments, the first and second inner plates 101 and 102 of the inner plate unit 100 may be aligned with each other at a lower position of the inner plate unit 100 adjacent to the cooling plate 500 in the third direction Z3 and form a height difference relative to each other at an upper position of the inner plate unit 100 adjacent to the bus bar B on the opposite side from the cooling plate 500.

In one or more embodiments, the height of the first inner plate 101 and the height of the first outer plate 201 may be substantially equal to the height of the sub-holder assembly HA, so that the upper locking protrusions 100a and 200a and the lower locking protrusions 100b and 200b respectively protruding from the upper and lower positions of the first inner plate 101 and the first outer plate 201 extend onto upper and lower surfaces of the sub-holder assembly HA including the first and second sub-holders H1 and H2. In one or more embodiments, the heights of the first inner plate 101, the first outer plate 201, and the sub-holder assembly HA may be equal or substantially equal to each other.

The second inner plate 102 may be formed differently from the first inner plate 101 and thus have the height relatively less than that of the first inner plate 101. In one or more embodiments, as the height of the second inner plate 102 is relatively lowered, the electrical connection between the sub-holders H (the first and third sub-holders H1 and H3 or the second and fourth sub-holders H2 and H4) arranged on both sides of the second inner plate 102 across the second inner plate 102 may not be interrupted by the second inner plate 102. Also, as the height of the second inner plate 102 is relatively lowered, the electrical connection between the sub-holders H arranged on both sides of the second inner plate 102 (in some embodiments, the electrical connection between battery cells accommodated in the sub-holders H, In one or more embodiments, the electrical connection by the bus bar B or a connection member connected to the bus bar B) may be prevented from conducting electricity to the second inner plate 102. In one or more embodiments, in embodiments of the present disclosure, in order to reinforce the rigidity of the sub-holder H or provide toughness to the sub-holder H, the first and second inner plates 101 and 102 may include a metal material, In one or more embodiments, steel, which is different from a plastic material of the sub-holder H. In one or more embodiments, in embodiments of the present disclosure, the sub-holder H may include a plastic material, considering moldability and insulation with battery cells accommodated in the sub-holder H. In one or more embodiments, in order to form insulation with the second inner plate 102 including steel, the height of the second inner plate 102 may be relatively low. Also, insulation may be formed for the electrical connection between the sub-holders H on both sides of the second inner plate 102 across the second inner plate 102. In embodiments of the present disclosure, the electrical connection may be established via the upper portion of the sub-holder assembly HA in the third direction Z3, and the cooling may be performed via the lower portion of the sub-holder assembly HA. In one or more embodiments, the electrical connection and cooling may be made via the opposite upper and lower portions of the sub-holder assembly HA, and thus, the electrical connection of the sub-holder H may be insulated with cooling media. In one or more embodiments, the second inner plate 102 may form a height difference with the sub-holder assembly HA or the first inner plate 101 so that the second inner plate 102 is away from the upper portion of the sub-holder assembly HA that forms the electrical connection. In one or more embodiments, in embodiments of the present disclosure, the first and second inner plates 101 and 102 may be connected to each other such that the first and second inner plates 101 and 102 are aligned with each other at the lower positions thereof and form a height difference at the upper positions thereof. In one or more embodiments, the lower ends of the first and second inner plates 101 and 102 may be aligned with each other and the upper ends of the first and second inner plates 101 and 102 may form a height difference relative to each other.

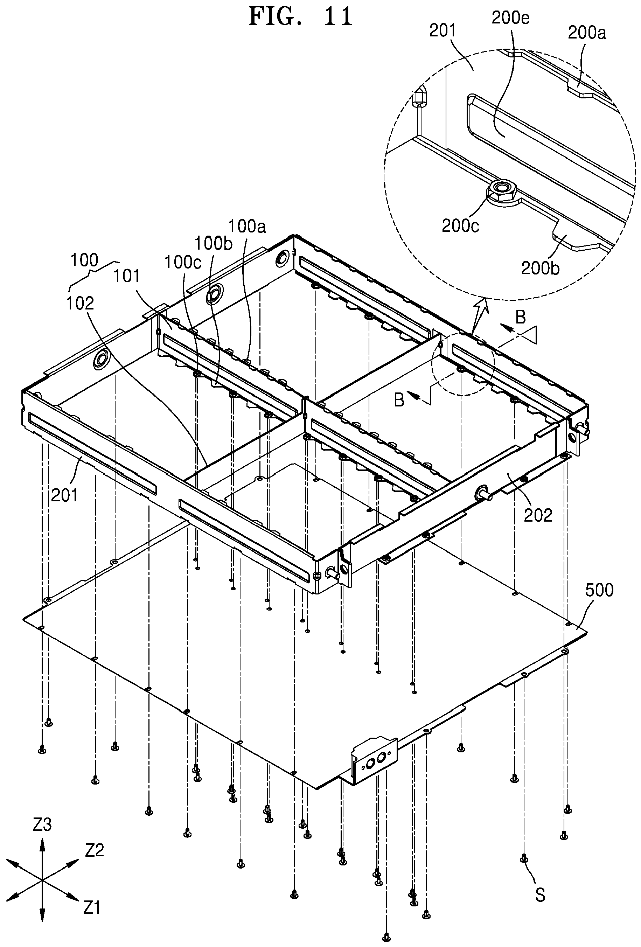

FIG. 11 is a perspective view illustrating an assembly structure of the cooling plate 500.

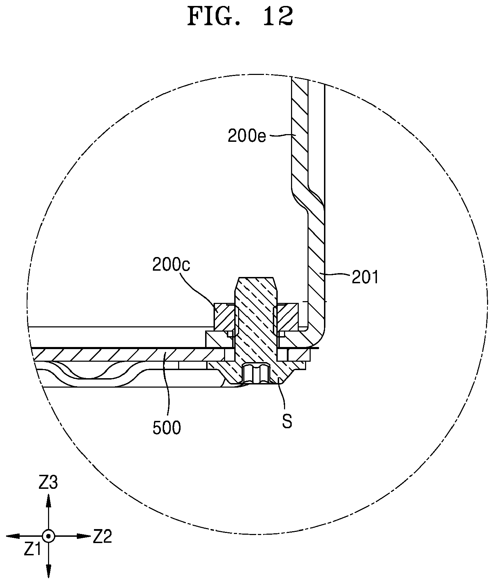

FIG. 12 is a cross-sectional view of the cooling plate 500 taken along line B-B of FIG. 11 and illustrates the assembly structure of the cooling plate 500.

Referring to the drawings, in embodiments of the present disclosure, the lower locking protrusions 100b and 200b may be formed at the lower ends of the first inner plate 101 and the first outer plate 201 that extend in parallel in the first direction Z1 with the first sub-holder H1 (or the second sub-holder H2) therebetween. A bent piece to which each of the nut members 100c and 200c is coupled may be located, together with the lower locking protrusions 100b and 200b, on the first inner plate 101 and the first outer plate 201. A plurality of lower locking protrusions 100b and 200b and a plurality of bent pieces to which the nut members 100c and 200c are coupled may be arranged at positions spaced apart from each other in the first direction Z1. In one or more embodiments, in embodiments of the present disclosure, the bent piece to which each of the nut members 100c and 200c is coupled may be located between the lower locking protrusions 100b and 200b in the first direction Z1. The nut members 100c and 200c may be respectively coupled to the bent pieces, and In one or more embodiments, the nut members 100c and 200c may be respectively welded and coupled to the bent pieces that are bent at the lower ends of the first inner plate 101 and the first outer plate 201.

In embodiments of the present disclosure, the fastening members S for coupling the cooling plate 500 and the sub-holder assembly HA to each other may be respectively inserted into the nut members 100c and 200c. In one or more embodiments, the fastening members S may sequentially pass through the cooling plate 500, disposed below the sub-holder assembly HA including the first and second sub-holders H1 and H2, and the nut members 100c and 200c in the third direction Z3 intersecting with the first and second directions Z1 and Z2 and may be then accommodated in lower portions of the first and second sub-holders H1 and H2. In one or more embodiments, in embodiments of the present disclosure, accommodation spaces capable of accommodating the fastening members S may be formed in lower portions of the first and second sub-holders H1 and H2 or the first to fourth sub-holders H1, H2, H3, and H4 forming the sub-holder assembly HA.

In embodiments of the present disclosure, the sub-holder assembly HA may include the first to fourth sub-holders H1, H2, H3, and H4 that are arranged in the first and second directions Z1 and Z2. In one or more embodiments, the sub-holder assembly HA may include the first and second sub-holders H1 and H2 adjacent to each other in the second direction Z2 and may further include the third sub-holder H3 located on the opposite side from the first sub-holder H1 in the first direction Z1, with respect to the second inner plate 102 of the inner plate unit 100 surrounding or extending around the first sub-holder H1 and the fourth sub-holder H4 located on the opposite side from the second sub-holder H2 in the first direction Z1, with respect to the second inner plate 102 of the inner plate unit 100 surrounding or extending around the second sub-holder H2.

In one or more embodiments, the first and third sub-holders H1 and H3 arranged in the first direction Z1 may be prevented from moving vertically in the third direction Z3 by the upper locking protrusions 100a and 200a and the lower locking protrusions 100b and 200b which protrude from the first outer plate 201 extending across the first and third sub-holders H1 and H3 and the different first inner plates 101 of the different inner plate units 100 respectively surrounding or extending around the first and third sub-holders H1 and H3. Similarly, the second and fourth sub-holders H2 and H4 arranged in the first direction Z1 may be prevented from moving vertically in the third direction Z3 by the upper locking protrusions 100a and 200a and the lower locking protrusions 100b and 200b which protrude from the first outer plate 201 extending across the second and fourth sub-holders H2 and H4 and the different first inner plates 101 of the different inner plate units 100 respectively surrounding or extending around the second and fourth sub-holders H2 and H4.

In embodiments of the present disclosure, the sub-holder assembly HA may include the first to fourth inner plate units 100 respectively surrounding or extending around the central corners E of the first to fourth sub-holders H1, H2, H3, and H4. As the first and second inner plates 101 and 102 of the first to fourth inner plate units 100 overlap with each other between the first to fourth sub-holders H1, H2, H3, and H4, the first to fourth inner plate units 100 may constitute the inner plate assembly 1000 having a cross shape that defines four divided regions in which the first to fourth sub-holders H1, H2, H3, and H4 are arranged.

The ends of the inner plate assembly 1000 in the first direction Z1 may include first bent portions T1 (one end in the first direction Z1) of first inner plates 101, having a wing shape, extending from a space between the first and second sub-holders H1 and H2 to out of the space between the first and second sub-holders H1 and H2, and bent in opposite directions along the second direction Z2 to surround or extend around corners of the first and second sub-holders H1 and H2 and other first bent portions T1 (the other end in the first direction Z1) of first inner plates 101, having a wing shape, extending from a space between the third and fourth sub-holders H3 and H4 to out of the space between the third and fourth sub-holders H3 and H4, and bent in opposite directions along the second direction Z2 to surround or extend around corners of the third and fourth sub-holders H3 and H4.

The ends of the inner plate assembly 1000 in the second direction Z2 may include second bent portions T2 bent from both ends of the second inner plates 102 extending in opposite directions along the second direction Z2 from the first inner plates 101 between the first and second sub-holders H1 and H2, to thereby surround corners of the first and second sub-holders H1 and H2 and other second bent portions T2 bent from both ends of the second inner plates 102 extending in opposite directions along the second direction Z2 from the first inner plates 101 between the third and fourth sub-holders H3 and H4, to thereby surround corners of the third and fourth sub-holders H3 and H4. In one or more embodiments, the second bent portions T2 and the other second bent portions T2 may have a wing shape bent in opposite directions along the first direction Z1.

As described above, the first and second bent portions T1 and T2 forming the ends of the inner plate assembly 1000 in the first and second directions Z1 and Z2 may respectively provide coupling positions Wand W2 with the second outer plates 202 extending in the second direction Z2 and the first outer plates 201 extending in the first direction Z1.

In one or more embodiments, the first outer plate 201 may be provided in a pair extending parallel to each other in the first direction Z1 at outer positions, facing each other, of the sub-holder assembly HA including the first to fourth sub-holders H1, H2, H3, and H4. Also, the second outer plate 202 may be provided in a pair extending parallel to each other in the second direction Z2 at outer positions, facing each other, of the sub-holder assembly HA including the first to fourth sub-holders H1, H2, H3, and H4. Also, the first and second outer plates 201 and 202 may be entirely arranged at the outer positions of the sub-holder assembly HA including the first to fourth sub-holders H1, H2, H3, and H4.

In one or more embodiments, the central position of the first outer plate 201 may establish a connection (a coupling position W2) with the second bent portion T2 forming the end of the inner plate assembly 1000 in the second direction Z2, and the central position of the second outer plate 202 may establish a connection (a coupling position W1) with the first bent portion T1 forming the end of the inner plate assembly 1000 in the first direction Z1. Also, both ends of the first outer plates 201 may include coupling flanges F which are bent in the second direction Z2 to provide coupling positions with the second outer plates 202 while surrounding or extending around the corners of the sub-holder assembly HA including the first to fourth sub-holders H1, H2, H3, and H4. In one or more embodiments, in embodiments of the present disclosure, the coupling flanges F formed at both ends of the first outer plate 201 extending in the first direction Z1 may overlap with both ends of the second outer plate 202 extending in the second direction Z2. In one or more embodiments, both ends of the second outer plate 202 and the coupling flanges F of the first outer plate 201 may be aligned with each other, so that an input/output terminal 300 electrically connected to the battery cell accommodated in the sub-holder assembly HA sequentially passes through the second outer plate 202 and the first outer plate 201 and is then exposed to the outside of the battery pack. In one or more embodiments, both ends of the second outer plate 202 and the coupling flanges F of the first outer plate 201, which are sequentially stacked on each other, may be welded around the input/output terminal 300 (a coupling position W3), and thus, both ends of the second outer plate 202 and the coupling flanges F of the first outer plate 201 may be welded and coupled to each other.

In embodiments of the present disclosure, the rigidity of the sub-holder assembly HA including the first to fourth sub-holders H1, H2, H3, and H4 may be secured (or improved) by the first inner plate 101 and the first outer plate 201 which support the sub-holder assembly HA using the upper locking protrusions 100a and 200a and the lower locking protrusions 100b and 200b at the inner positions and the outer positions of the sub-holder assembly HA. The sub-holder assembly HA may be located between the upper locking protrusions 100a and 200a and the lower locking protrusions 100b and 200b formed at the upper positions and the lower positions of the first inner plate 101 and the first outer plate 201 and thus prevented from moving vertically in the third direction Z3 intersecting with the first and second directions Z1 and Z2. In conjunction with the upper locking protrusions 100a and 200a and the lower locking protrusions 100b and 200b of the first inner plate 101 and the first outer plate 201, the embossing portions 100e and 200e formed on the first inner plate 101 and the first outer plate 201 may match (e.g., may correspond to) recessed grooves formed in the first to fourth sub-holders H1, H2, H3, and H4 facing the first inner plate 101 and the first outer plate 201, thereby structurally integrating the first inner plate 101, the first outer plate 201, and the sub-holder assembly HA with each other. In one or more embodiments, different first and second sub-holders H1 and H2 (or the third and fourth sub-holders H3 and H4) arranged on both sides of the first inner plate 101 may be prevented from moving relative to each other. Deformation, such as bending of the entire sub-holder assembly HA, due to the relative movement between the different first and second sub-holders H1 and H2 (or the third and fourth sub-holders H3 and H4) may be prevented. Bending or twisting due to the weight of the sub-holder assembly HA or the force or load acting on the sub-holder assembly HA may be transmitted to the first inner plate 101 and the first outer plate 201 which are integrated with the sub-holder assembly HA.

In embodiments of the present disclosure, a structure, in which the sub-holder assembly HA, the first inner plate 101, and the first outer plate 201 are physically integrated with each other, may be formed by the upper locking protrusions 100a and 200a and the lower locking protrusions 100b and 200b, which are formed at the upper positions and the lower positions of the first inner plate 101 and the first outer plate 201 disposed at the inner position and the outer position of the sub-holder assembly HA including different sub-holders H. Also, this structure mentioned above may be formed by matching the first inner plate 101 and the first outer plate 201 with the first to fourth sub-holders H1, H2, H3, and H4. The rigidity of the entire battery pack may be provided by (or may be improved by) the first inner plate 101 and the first outer plate 201 rather than the sub-holder assembly HA.

In embodiments of the present disclosure, the integrated coupling between the first inner plate 101, the first outer plate 201, and the cooling plate 500 may be formed so that sufficient rigidity is provided to the battery pack from the first inner plate 101 and the first outer plate 201. In one or more embodiments, the fastening members S for assembling the cooling plate 500 may pass through the nut members 100c and 200c welded to the bent pieces of the first inner plate 101 and the first outer plate 201. The integrated coupling between the cooling plate 500, the first inner plate 101, and the first outer plate 201 may be formed by the fastening members S, so that the force or load acting on the cooling plate 500 is directly transmitted to the first inner plate 101 and the first outer plate 201. In one or more embodiments, in a comparative example compared to the present disclosure, the fastening members S for assembling the cooling plate 500 may be inserted into the nut members 100c and 200c that have been formed in the sub-holder assembly HA by an insert molding process. In this comparative example, the fastening members S may transmit the weight of the cooling plate 500 or the force or load acting on the cooling plate 500 to the nut members 100c and 200c, which are inserted and molded into the sub-holder assembly HA, rather than the first inner plate 101 and the first outer plate 201. However, in the embodiments of the present disclosure, the fastening members S for assembling the cooling plate 500 may be inserted into the nut members 100c and 200c that have been welded to the first inner plate 101 and the first outer plate 201. The fastening members S may transmit the weight of the cooling plate 500 or the force or load acting on the cooling plate 500 to the first inner plate 101 and the first outer plate 201 to which the nut members 100c and 200c are welded. In one or more embodiments, the first inner plate 101 and the first outer plate 201 may be configured such that the weight of the sub-holder assembly HA and the cooling plate 500 or the force or load acting thereon are transmitted to the first inner plate 101 and the first outer plate 201 which provide the rigidity of the entire battery pack. In one or more embodiments, in the comparative example in which the fastening members S for assembling the cooling plate 500 are inserted into the nut members 100c and 200c formed in the sub-holder assembly HA by the insert molding process, the weight of the cooling plate 500 or the load acting on the cooling plate 500 may be directly transmitted to the sub-holders H forming the sub-holder assembly HA. The weight or load acting non-uniformly on the different sub-holders H forming the sub-holder assembly HA including the sub-holders H may cause movement between the sub-holders H adjacent to each other. As a result, the rigidity of the entire battery pack may be deteriorated.

The present disclosure provides the battery pack that includes at least two sub-holders each accommodating the plurality of battery cells. The inner plates and the outer plates may be firmly assembled to each other while surrounding or extending around the sub-holders or the sub-holder assembly including the plurality of sub-holders to thereby prevent movement between the sub-holders different from each other and may resist the weight of the sub-holders or the sub-holder assembly or the load acting on the sub-holders or the sub-holder assembly. Therefore, the rigidity of the entire battery pack may be strengthened by the inner plates and the outer plates.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims.

## Claims

1. A battery pack comprising:
a sub-holder assembly comprising first and second sub-holders arranged adjacent to each other, each accommodating a plurality of battery cells and comprising side portions extending in first and second directions different from each other;
a first inner plate (101) and a first outer plate (201) provided at an inner position and an outer position of the sub-holder assembly, respectively, and extending in the first direction with the first sub-holder therebetween, the first inner plate (101) and the first outer plate (201) comprising an upper locking protrusion (100a, 200a) and a lower locking protrusion (100b, 200b) that protrude toward an upper surface and a lower surface of the first sub-holder, respectively, in a third direction intersecting with the first and second directions and a nut member (100c, 200c) that is arranged together with the lower locking protrusion (100b, 200b) in the first direction; and
a fastening member sequentially passing through a cooling plate (500) and the nut member (100c, 200c) and accommodated in a lower portion of the first sub-holder, wherein the cooling plate (500) is disposed below the first and second sub-holders in the third direction.

2. The battery pack as claimed in claim 1, wherein the first and second sub-holders are arranged adjacent to each other in the second direction,
the a pair of first outer plates (201) is provided and arranged at outer positions, on opposite sides, of the first and second sub-holders,
the first inner plate (101) is located at an inner position between the first and second sub-holders, and
the first and second sub-holders are respectively arranged between the first inner plate (101) and one of the first outer plates (201) and between the first inner plate (101) and the other one of the first outer plates (201), and wherein the upper locking protrusion (100a, 200a) and the lower locking protrusion (100b, 200b) face each other to prevent the first and second sub-holders from moving in an up and down direction.

3. The battery pack as claimed in claim 1 or 2, wherein the pair of first inner plates (101) is provided overlapping with each other while extending in parallel in the first direction between the first and second sub-holders, and
the first and second sub-holders are arranged between the lower locking protrusions (100b, 200b) and the upper locking protrusions (100a, 200a) protruding in both directions from the pair of first inner plates (101).

4. The battery pack as claimed in any one of the previous claims, wherein each of the first inner plate (101) and the first outer plate (201) comprises an embossing portion (100e, 200e) that corresponds to the first sub-holder located between the first inner plate (101) and the first outer plate (201).

5. The battery pack as claimed in claim 4, wherein the embossing portions (100e, 200e) of the first inner plate (101) and the first outer plate (201) extend in the first direction and are configured to prevent the first inner plate (101), the first outer plate (201), and the first sub-holder from moving relative to each other in the third direction intersecting with the first and second directions.

6. The battery pack as claimed in any one of the previous claims, wherein the first inner plate (101) extends in the first direction from a central bent portion that surrounds a central corner of each of the first and second sub-holders, and
an inner plate unit is formed by integrating the first inner plate (101) with a second inner plate (102) extending in the second direction from the central bent portion.

7. The battery pack as claimed in claim 6, wherein the central corners of the first and second sub-holders are formed at inner positions of the sub-holder assembly, and/or wherein first inner plates (101) of different inner plate units provided between the first and second sub-holders and respectively surrounding the first and second sub-holders overlap with each other while extending in parallel in the first direction.

8. The battery pack as claimed in claim 6, 2^{nd} alternative, wherein extension ends of the first inner plates (101) extending from an area between the first and second sub-holders to an area beyond the first and second sub-holders are provided with first bent portions bent in both directions to surround corners of the first and second sub-holders.

9. The battery pack as claimed in claim 6, wherein second inner plates (102) of different inner plate units surrounding the first and second sub-holders extend in opposite directions along the second direction from first inner plates (101) between the first and second sub-holders.

10. The battery pack as claimed in claim 9, wherein extension ends of the second inner plates (102) extending in opposite directions along the second direction from the first inner plates (101) between the first and second sub-holders are provided with second bent portions bent to surround corners of the first and second sub-holders.

11. The battery pack as claimed in claim 6, further comprising a bus bar disposed, above the sub-holder assembly, opposite to the cooling plate (500) in the third direction, the bus bar being configure to electrically connect ones of the battery cells to each other.

12. The battery pack as claimed in any one of the previous claims 6 to 11, wherein the first and second inner plates (102) of the inner plate unit form a height difference relative to each other in the third direction.

13. The battery pack as claimed in claim 12 when depending on claim 11, wherein a lower surface of the first and second inner plates (102) of the inner plate unit are aligned with each adjacent to the cooling plate (500) in the third direction and an upper surface of the first and second inner plates of the inner plate unit have a height difference relative to each other adjacent to the bus bar on the opposite side from the cooling plate (500).

14. The battery pack as claimed in claim 11, wherein a height of the first inner plate (101) and a height of the first outer plate (201) are substantially equal to a height of the sub-holder assembly, such that the upper locking protrusion (100a, 200a) and the lower locking protrusion (100b, 200b) respectively protruding from upper and lower positions of the first inner plate (101) and the first outer plate (201) extend onto upper and lower surfaces of the sub-holder assembly comprising the first and second sub-holders, and
a height of the second inner plate (102) is less than the height of the sub-holder assembly.

15. The battery pack as claimed in claim 1, wherein each of the upper locking protrusion (100a, 200a) and the lower locking protrusion (100b, 200b) is provided in plurality spaced apart from each other in a longitudinal direction of the first inner plate (101) and the first outer plate (201), and
Wherein the nut member (100c, 200c) is provided in a plurality and respectively welded and coupled to a plurality of bent pieces arranged between the lower locking protrusions (100b, 200b) in the longitudinal direction of the first inner plate (101) and the first outer plate (201).

16. The battery pack as claimed in claim 15, wherein an accommodation space is formed in a lower portion of the first sub-holder to accommodate the fastening member.

17. The battery pack as claimed in claim 1, wherein the sub-holder assembly further comprises:
a third sub-holder located on the opposite side from the first sub-holder in the first direction, with respect to a second inner plate (102) of an inner plate unit surrounding the first sub-holder; and
a fourth sub-holder located on the opposite side from the second sub-holder in the first direction, with respect to a second inner plate (102) of an inner plate unit surrounding the second sub-holder.

18. The battery pack as claimed in claim 17, wherein the first and third sub-holders arranged in the first direction are configured to be prevented from moving in an up and down direction by upper locking protrusions (100a, 200a) and lower locking protrusions (100b, 200b), which protrude from a first outer plate (201) extending across the first and third sub-holders and different first inner plates (101) of different inner plate units respectively surrounding the first and third sub-holders, and
the second and fourth sub-holders arranged in the first direction are prevented from moving in an up and down direction by upper locking protrusions (100a, 200a) and lower locking protrusions (100b, 200b), which protrude from a first outer plate (201) extending across the second and fourth sub-holders and different first inner plates (101) of different inner plate units respectively surrounding the second and fourth sub-holders.

19. The battery pack as claimed in claim 17, wherein the inner plate unit comprises first to fourth inner plate units (100) respectively surrounding central corners of the first to fourth sub-holders different from each other, and
the first to fourth inner plate units (100) form an inner plate assembly (1000) having a cross shape and defining four divided regions, in which the first to fourth sub-holders are arranged, as the first and second inner plates (102) of the first to fourth inner plate units (100) overlap each other.

20. The battery pack as claimed in claim 19, wherein ends of the inner plate assembly (1000) in the first direction comprise:
first bent portions of first inner plates (101), having a wing shape, extending from an area between the first and second sub-holders to beyond the first and second sub-holders, and bent in opposite directions along the second direction to surround corners of the first and second sub-holders; and
other first bent portions of first inner plates (101), having a wing shape, extending from an area between the third and fourth sub-holders to beyond the third and fourth sub-holders, and bent in opposite directions along the second direction to surround corners of the third and fourth sub-holders.

21. The battery pack as claimed in claim 20, wherein ends of the inner plate assembly (1000) in the second direction comprise:
second bent portions bent from both ends of the second inner plates (102) extending in opposite directions along the second direction from the first inner plates (101) between the first and second sub-holders, to thereby surround corners of the first and second sub-holders; and
other second bent portions bent from both ends of the second inner plates (102) extending in opposite directions along the second direction from the first inner plates (101) between the third and fourth sub-holders, to thereby surround corners of the third and fourth sub-holders,
wherein the second bent portions and the other second bent portions have a wing shape bent in opposite directions along the first direction.

22. The battery pack as claimed in claim 21, wherein the first and second bent portions forming the ends of the inner plate assembly (1000) in the first and second directions provide a coupling position with a second outer plate (202) extending in the second direction and a coupling position with a first outer plate (201) extending in the first direction, respectively.
